# EUROPEAN PATENT APPLICATION

(11) **EP 4 722 928 A1**
(43) Date of publication of application: **08.04.2026**
(21) Application number: 25205932.4
(22) Date of filing: 01.10.2025
(51) Int. Cl.: G06F 12/084, G06F 12/0868

(54) **SCALABLE AND HIGH-PERFORMANCE SHARED OBJECT STORAGE USING NON-COHERENT DISAGGREGATED MEMORY**

(30) Priority: 01.10.2024 US 202418903960
(71) Applicant: VMware LLC, Palo Alto, CA 94304 (US)
(72) Inventor: Amaro Ramirez, Emmanuel, Hayward, CA, 94544 (US); Aguilera, Marcos Kawazoe, Cupertino, CA, 95014 (US)
(74) Representative: Grünecker Patent- und Rechtsanwälte PartG mbB

(57) **Abstract**

A computer system including a first computer and a second computer, wherein the first computer is configured to access data stored in a memory system remotely from the first and second computers, by performing the steps of: determining a first key associated with first data that is stored in the memory system; determining, based on the first key, to transmit to the second computer, a request for a first reference to the first data, and then transmitting the request for the first reference to the second computer; receiving the first reference from the second computer, which the second computer determines by using the first key to locate a first key-reference pair in the memory system and then reading the first reference therefrom; and reading the first data directly from the memory system using the first reference received from the second computer to locate a memory address of the first data.

## Description

### Background

Disaggregated memory is memory that is remote from (external to) the physical enclosures of the computers that access it. Disaggregated memory is an emerging technology that offers several advantages such as enabling multiple computers to share memory and also increasing the memory capacity of the computers, even to beyond what would otherwise fit in their enclosures. For example, the external memory may be stored in one or more memory systems such as server computers that each includes, e.g., hundreds of Terabytes or Petabytes of memory. Such memory systems are referred to herein as "memory servers."

In a computer system in which multiple computers share memory provided by a memory server, there is an issue of how to handle different computers caching the same data in central processing units (CPUs) therein. For example, a CPU in one computer may cache a first version of data stored at a particular address of the memory server. Later, a CPU in another computer may cache a different version of that data after that data has been updated in the memory server. At such point, there is a risk that CPUs in different computers will provide different (inconsistent) values from their respective caches to applications executing on the different computers, leading to unintended and unpredictable behavior.

To solve for the above problems, it is possible to enforce "cache coherence," which refers to the consistency and synchronization of data cached by computers throughout a computer system. A cache coherence protocol may be utilized by the computers to provide for such synchronization by communication therebetween. For example, using such a protocol, when one computer updates a copy of data at a particular address of the memory server, that computer may communicate such updated data to the other computers. Any of the other computers that have stale (outdated) versions of that same data in caches of their CPUs may then learn of the update to the data and may then update their caches accordingly.

However, maintaining cache coherence requires a significant amount of communication between computers. Accordingly, network resources may be overly burdened by such a cache coherence protocol if the number of computers increases, e.g., beyond 16 computers. The communication required may thus be costly and may degrade the execution of applications as network bandwidth is overly taxed and network latency increases. Based on such scalability issues, it is desirable to implement a computer system with disaggregated memory that avoids the above-described unintended behavior of applications, without the overhead of enforcing cache coherence between computers.

### Summary

One or more embodiments provide a computer system including a first computer and a second computer, wherein the first and second computers each includes a processor and local memory. The processor of the first computer executes instructions stored in the local memory of the first computer to access data stored in a memory system remotely from the first and second computers. By executing such instructions, the first computer performs the steps of: determining a first key associated with first data that is stored in the memory system; determining, based on the first key, to transmit to the second computer, a request for a first reference to the first data, and then transmitting the request for the first reference to the second computer, wherein the request for the first reference includes the first key; receiving the first reference from the second computer, which the second computer determines by using the first key to locate a first key-reference pair in the memory system and then reading the first reference from the first key-reference pair; and reading the first data directly from the memory system using the first reference received from the second computer to locate a memory address of the first data in the memory system.

### Brief Description of the Drawings

Figure 1 is a block diagram of a computer system in which embodiments may be implemented.
Figure 2 is a block diagram of an example of a memory server of the computer system.
Figure 3 is a flow diagram of a method that may be performed by a computer of the computer system to access application data stored in the memory server, according to some embodiments.
Figure 4 is a flow diagram of a method that may be performed by a computer of the computer system to store a new key-reference pair in the memory server, according to some embodiments.
Figure 5 is a flow diagram of a method that may be performed by a computer of the computer system to delete a key-reference pair from the memory server, according to some embodiments.

### Detailed Description

Techniques are described for managing a computer system in which a plurality of computers share disaggregated memory provided by one or more memory servers. The disaggregated memory includes data used by one or more applications executing on the computers, referred to herein as "application data." Additionally, the disaggregated memory includes references to the application data such as pointers thereto. The computers read the references from the memory server and then use the references for accessing the application data, e.g., to read from or write to the disaggregated memory. For example, according to some embodiments, the references are stored in a hash table. For example, a chained hash table may be utilized in which each bucket may store a plurality of key-reference pairs in a linked list.

Control over the references is divided among the computers. For example, if there are four computers sharing the disaggregated memory, each of the computers may control one quarter of the references. As used herein, a computer that controls a particular reference is said to "own" that reference. Only the computer that owns a particular reference is able to access that reference. For example, in the case of a chained hash table, all the references of a particular bucket have a single owner, and only the computer that owns the references of that bucket may access the bucket to access the references therein.

For a computer to access application data at a particular memory address of the memory server, the computer follows the reference corresponding to that application data. If the computer owns that reference, the computer may read the reference directly from the memory server and then use that reference to directly access the application data. On the other hand, if the computer does not own that reference, then the computer may request the owner of the reference for it. The owner then reads the reference from the memory server and transmits the reference to the other computer to be used thereby to directly access the application data.

Although control over the references is divided, control over the application data itself is not similarly divided. Once a computer has a reference, that computer may use that reference repeatedly to access data at a particular address of a memory server without requesting the owner of that reference for permission. Because control over the application data is not divided, computers are able to access memory efficiently. For example, if the owner of a reference was the only computer that could use that reference to access data, the owner would repeatedly copy that data and transmit it to other computers. Embodiments herein transmit references between computers but do not require transmitting application data therebetween, which requires less bandwidth and thus avoids overly taxing a network and degrading application performance.

Additionally, according to embodiments, various mechanisms are used to manage CPU caches without implementing a cache coherence protocol. For example, CPU caches are strategically flushed, e.g., each time an application newly requests to access data for which a version is currently cached. After the CPU caches are flushed, because a computer no longer includes the data in its CPU caches, the computer reads the data from a memory server to provide to the application. This effectively bypasses the CPU caches, which allows for an application to access the latest version of data rather than access a stale version of that data that might be cached. In other words, this prevents a CPU from providing cached but possibly stale data to the application and causes the computer to instead read the data currently stored in the memory server. These and further aspects of the invention are discussed below with respect to the drawings.

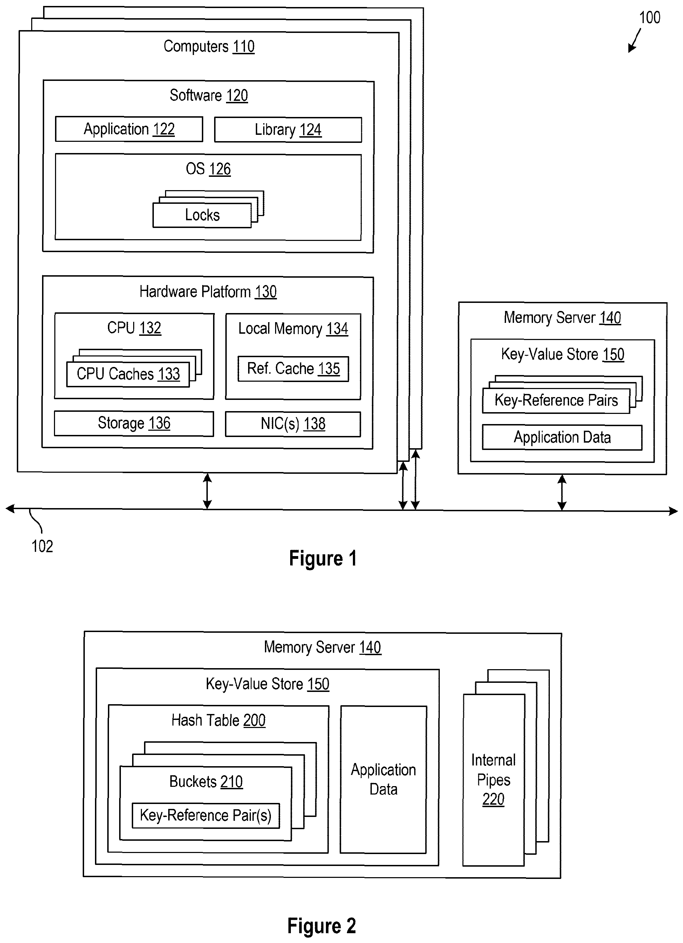

Figure 1 is a block diagram of a computer system 100 in which embodiments may be implemented. Computer system 100 includes a plurality of computers 110 and a memory server 140. For example, each of computers 110 and memory server 140 may be a server computer in a data center. Memory server 140 is remote from (external to) computers 110, computers 110 sharing memory resources provided by memory server 140 as disaggregated memory. Although only one memory server is illustrated in computer system 100, there may be a plurality of such memory servers providing memory to computers 110.

Each of computers 110 is constructed on a hardware platform 130 such as an x86 architecture platform. Hardware platform 130 includes components of a computer, such as a CPU 132, local memory 134 such as random-access memory (RAM), local storage 136 such as one or more magnetic drives or solid-state drives (SSDs), and one or more network interface controllers (NICs) 138. CPU 132 is configured to execute instructions such as executable instructions that perform one or more operations described herein, which may be stored in local memory 134. Local storage 136 of computers 110 may optionally be aggregated and provisioned as a virtual storage area network (vSAN). NICs 138 enable computers 110 to communicate with each other and with other devices over a network 102 such as a local area network (LAN).

Hardware platform 130 of each of computers 110 supports software 120. Software 120 includes an operating system (OS) 126 on which an application 122 executes using a library 124. As used herein, an "application" is a computer program that may be launched on a computer, such as a web server program, a database server program, a data analytics program, or a machine learning program. In some implementations, application 122 executes using a plurality of processes and/or threads (not shown). OS 126 may include a plurality of locks to synchronize operations, e.g., for processes and/or threads of application 122, as described further below. As used herein, a "lock" is a mechanism used to ensure that only one entity (e.g., process or thread) is able to perform a corresponding operation, i.e., such operation requires possession of the lock. For example, a read/write lock allows multiple entities to read a resource concurrently but requires exclusive access of the lock for writing to the resource.

Library 124 is a collection of executable code that application 122 may use to perform various functionalities described herein for accessing application data from memory server 140. Although only one application and library are illustrated in one of computers 110, any of computers 110 may execute a plurality of applications and/or may include a plurality of supporting libraries. Furthermore, computers 110 may execute application 122 as a distributed application, or computers 110 may each execute different applications that share memory data of memory server 140.

Memory server 140 stores data accessed by computers 110 as disaggregated memory. For example, memory server 140 may be a computer such as a server computer that includes a plurality of volatile and/or non-volatile memory devices (not shown) for storing the disaggregated memory. The disaggregated memory includes a key-value store 150, which is a data structure object that includes a plurality of key-reference pairs and application data. The application data, which represents the values of key-value store 150, is data used by the application(s) executing on computers 110 for performing functionality thereof. For example, for applications that track records for employees, the application data may include information about the employees such as job titles, work locations, and home addresses thereof.

As used herein, a key-reference pair is a data structure object including a key and corresponding reference. The keys of the key-reference pairs are identifier (IDs) used for accessing corresponding references such as IDs of employees. The references of the key-reference pairs are, e.g., pointers to the application data. For computers that access the references, the references provide direct access to memory addresses of the application data in memory server 140. As used herein, when one of computers 110 performs an operation "directly" on memory server 140 such as accessing a key-reference pair or application data from key-value store 150, computer 110 performs the operation by communicating with memory server 140 and without requesting another of computers 110 to otherwise help with performing the operation.

Computers 110 may access key-value store 150 over network 102, which may be, e.g., a LAN. Alternatively, computers 110 may access key-value store 150 over a separate specialized network that carries memory traffic faster than network 102. Additionally, each of computers 110 owns (controls) a subset of the references of the key-reference pairs. Only the computer that owns a particular one of the references is able to access the associated key-reference pair from key-value store 150. However, once any of computers 110 acquires one of the references, that one of the references may be used repeatedly for locating and accessing corresponding application data from key-value store 150.

In each of computers 110, CPU 132 includes a plurality of CPU caches 133 for temporarily storing data. As used herein, each of CPU caches 133 is a small, high-speed CPU component that stores information such as frequently accessed information. CPU 132 may access data from CPU caches 133 more quickly than it can access data from local memory 134 or from memory server 140. Additionally, in each of computers 110, local memory 134 includes a reference cache 135. As used herein, reference cache 135 is a region of local memory 134 at which references to application data are stored.

For example, when one of computers 110 acquires one of the references to be used for reading application data from key-value store 150, the reference may be stored in reference cache 135. Then, when the reference is used to read the application data, the read data may be stored in one of CPU caches 133 for fast access. For example, 64 bytes of application data may be read from key-value store 150 at one time and stored in one of CPU caches 133. Application 122 may then access that data directly, e.g., 4 bytes at a time, which computer 110 may provide directly from CPU 132. Although only one CPU is illustrated for each of computers 110, each of computers 110 may include a plurality of CPUs.

Figure 2 is a block diagram of an example of memory server 140. In the example of Figure 2, memory server 140 includes internal pipes 220 in addition to key-value store 150. Furthermore, in the example of Figure 2, key-value store 150 includes a hash table 200 in addition to the application data. As used herein, a "hash table" is a data structure object that employs a hash function for retrieving data therefrom, and a "hash function" is an algorithm such as one of the Secure Hash Algorithms (SHA), e.g., SHA-256, that transforms input data into a fixed-size value. The fixed-size value output from a hash function is referred to as a "hash."

The slots of a hash table at which data is stored are referred to as "buckets." Accordingly, in the example of Figure 2, hash table 200 includes a plurality of buckets 210 for storing the key-reference pairs. Additionally, in the example of Figure 2, each of buckets 210 may store either a single key-reference pair or may store a plurality of key-reference pairs, e.g., in a linked list. As used herein, a "linked list" is a data structure object that stores data in nodes, e.g., storing a single key-reference pair in each node, whereby the nodes include pointers therebetween. For example, in a "singly linked list," each node points to a next node of the linked list, except for the last node, which points to "null."

In the example of Figure 2, internal pipes 220 provide an efficient communication mechanism for computers 110. For example, each of internal pipes 220 may be a ring buffer that stores messages at positions thereof. Furthermore, each of internal pipes 220 may provide only for one-way communication, in which case the sender of a message may be referred to as a "producer," and the recipient as a "consumer." Alternatively, each of internal pipes 220 may provide for two-way communication, e.g., allowing for a "producer" to transmit a request to a "consumer" and for the "consumer" to transmit a response to the "producer" via the same internal pipe. For example, a producer and consumer for one of internal pipes 220 may be different ones of computers 110 or may be applications (or processes or threads therein) on different ones of computers 110.

For example, a producer may send a message to a consumer requesting the consumer for a reference that the consumer owns. To communicate the message, the producer may store the message in one of internal pipes 220. The producer may then transmit a notification to the consumer, e.g., over network 102, to read the message from the internal pipe. Upon reading the message, the consumer may locate the requested reference from key-value store 150. Then, to transmit the reference to the producer, the consumer may store a message including the reference in the same one of internal pipes 220 and transmit a notification to the producer, e.g., over network 102, to read the message from the internal pipe. One example of implementing internal pipes for efficient communication between computers is described in further detail in U.S. Patent Application No. 18/806,558, filed August 15, 2024, the entire contents of which are incorporated by reference herein.

It should be noted that computers 110 may perform operations to ensure the correctness of accesses to the application data. Such operations may account for situations in which concurrent accesses to the same application data could otherwise lead to unintended consequences. For example, one of computers 110 may be writing to application data at the same time that another of computers 110 is reading that same application data. To account for such situations, for example, computers 110 may employee a hash function, e.g., SHA-256, to ensure that unintended consequences are avoided.

For example, when one of computers 110 writes application data to key-value store 150, it may compute a hash of the application data by inputting the application data to the hash function, and then store the resulting hash in key-value store 150. Continuing the above example, when one of computers 110 reads application data from key-value store 150, it may compute a hash of the read application data by inputting the read application data to the hash function. The hash of the read application data may then be compared to a hash stored in key-value store 150. If the hashes match, then the application data read from key-value store 150 is correct because it matches the application data previously written to key-value store 150.

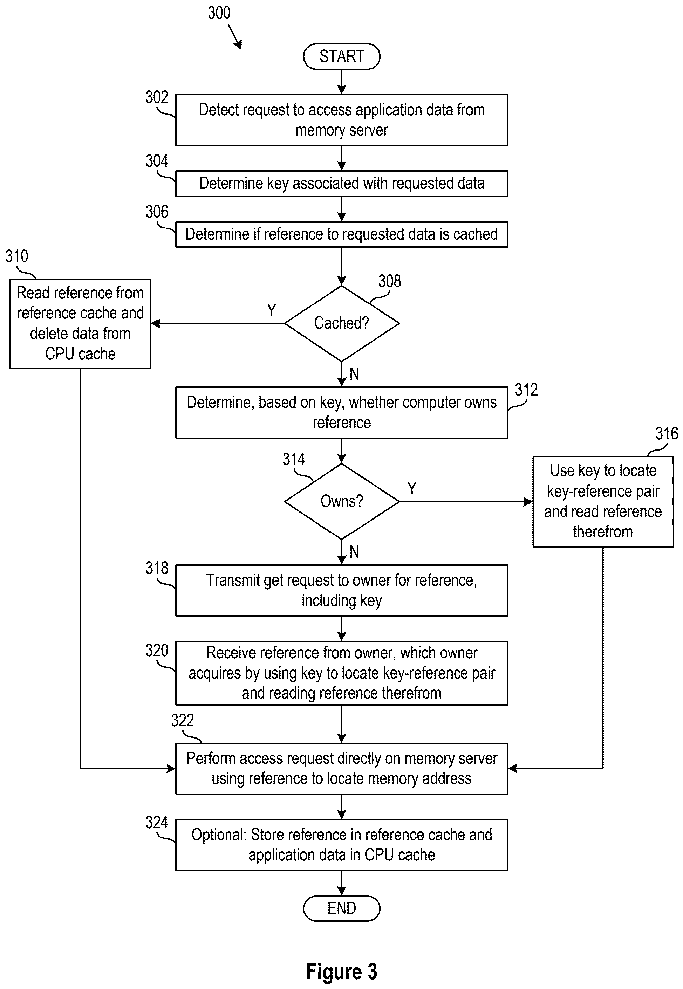

Figure 3 is a flow diagram of a method 300 that may be performed by one of computers 110 to access the application data, according to some embodiments. At step 302, computer 110 detects a request to access application data. For example, the request may originate from a process or thread of application 122. The request may be, e.g., to read the current version of the application data stored in key-value store 150 or to write an updated version of the application data to key-value store 150.

At step 304, computer 110 determines a key associated with the requested data. For example, computer 110 may locally store a list of keys in local memory 134. For example, a process or thread of application 122 that is requesting to access the application data may select one of the keys from the list and specify the key as corresponding to the application data to be accessed. For example, if the process or thread is requesting to access application data corresponding to a particular employee, the process or thread may select a key that includes an ID of the employee therein.

At step 306, computer 110 determines if a reference to the requested application data is already cached in reference cache 135. For example, computer 110 may search for a reference associated with the key, e.g., according to metadata in local memory 134 associating keys with references. At step 308, if the reference is already cached in reference cache 135, method 300 moves to step 310, and computer 110 reads the reference from reference cache 135. Computer 110 also deletes any previously read version of the requested application data from one of CPU caches 133. Accordingly, in case the requested application data has been updated in key-value store 150 since a previous version of the application data was cached, computer 110 avoids providing the outdated version of the application data, e.g., to the requesting process or thread of application 122. Computer 110 thus bypasses CPU caches 133.

Returning to step 308, if the reference is not already cached, method 300 moves to step 312. At step 312, computer 110 determines, based on the key, whether computer 110 owns the corresponding reference. For example, each of the keys may comprise an owner field including an ID of one of computers 110 that owns the corresponding reference. For example, if computer 110 is the owner, the key may comprise an owner field including an ID of computer 110 and comprise another field including an ID of an employee. As another example, if another one of computers 110 is the owner, the owner field may include an ID of the other one of computers 110, and the other field may include the ID of the employee. According to such embodiments, computer 110 may read the owner field of the key to determine if it owns the corresponding reference.

At step 314, if computer 110 owns the reference, method 300 moves to step 316. At step 316, computer 110 uses the key to locate the associated key-reference pair in key-value store 150 (the key-reference pair with a matching key) and read the reference therefrom. For example, following the example of Figure 2, computer 110 may apply a hash function to the key, the hash function outputting a value corresponding to one of buckets 210. Computer 110 may then locate the associated key-reference pair in the determined one of buckets 210. If there are multiple key-reference pairs stored in a linked list in the bucket, computer 110 may traverse the linked list to locate the associated key-reference pair, moving from one node of the linked list to the next until locating a node including the key-reference pair.

Additionally, at step 316, to avoid multiple processes or threads of application 122 making concurrent accesses to the same one of buckets 210, computer 110 may employ a locking mechanism. For example, upon determining the one of buckets 210, computer 110 may select a lock from OS 126 associated with the bucket (and associated with any key-reference pairs therein). If it is currently taken, e.g., as indicated by metadata of OS 126, computer 110 may wait until the lock becomes available, e.g., as indicated by the metadata. Once the lock becomes available, computer 110 may update the lock to indicate that it is now taken, e.g., by updating the metadata. Then, after reading the reference from the key-reference pair, computer 110 may release the lock, e.g., by updating the metadata to indicate that the lock is available.

Returning to step 314, if computer 110 does not own the reference, method 300 moves to step 318. At step 318, computer 110 transmits a get request to the owner, the get request including the key. As used herein, a get request is a message that indicates that the sender is requesting the receiver for the reference associated with a key included in the get request. For example, computer 110 may store the get request in one of internal pipes 220. Computer 110 may then transmit a notification to the owner identifying the internal pipe. The owner of the reference may then read the get request from the internal pipe.

At step 320, computer 110 receives the reference from the owner. The owner acquired the referenced by using the key from the get request to locate the associated key-reference pair in key-value store 150 and then reading the reference therefrom, in the manner discussed above with reference to step 316. For example, the owner may store the reference in a new message in the internal pipe as a response to the get request. The owner may further transmit a notification to computer 110 indicating to read the response from the internal pipe.

At step 322, computer 110 performs the access request, e.g., from the process or thread of application 122, directly on memory server 140. Specifically, computer 110 uses the reference to locate a memory address of memory server 140 at which the requested application data is stored. For example, if the reference is a pointer, computer 110 may access a memory address of memory server 140 stored in the pointer. For example, depending on the type of access request, computer 110 may read the current version of the application data stored in the memory address of memory server 140 or write an updated version of the application data to the memory address of memory server 140.

Additionally, as discussed above, computer 110 may perform additional operations to ensure the correctness of accesses to the application data. For example, if computer 110 writes updated application data in step 322, computer 110 may also compute a hash of the application data and store the hash in key-value store 150. As another example, if computer 110 reads application data in step 322, computer 110 may compute a hash of the read application data and compare the hash of the read application data to a corresponding hash stored in key-value store 150. If the hashes match, the read application data is correct. If they do not match, computer 110 may reread the application data from key-value store 150, compute a hash of the reread application data, and compare the hash of the reread application data to the hash stored in key-value store 150. The reread application data is correct if the hashes match.

At step 324, computer 110 may optionally store the reference in reference cache 135 and application data in one of CPU caches 133. If computer 110 read data from key-value store 150 at step 322, computer 110 may store a copy of the read data in the one of CPU caches 133. If computer 110 wrote updated data to key-value store 150 at step 322, computer 110 may store a copy of the written data in the one of CPU caches 133. On the other hand, to save processing resources and time, if computer 110 wrote updated data to key-value store 150, computer 110 may determine not to update CPU caches 133, and a process or thread of application 122 may later read the updated data from key-value store 150 (thus bypassing CPU caches 133). After step 324, method 300 ends.

It should be noted that similar to computer 110 transmitting a get request at step 318, computer 110 may receive a get request from another of computers 110 for a different reference that is owned by computer 110, e.g., via one of internal pipes 220. The get request may include another key associated with application data stored at another address. In response, computer 110 determines the different reference by using the other key to locate another key-reference pair in key-value store 150 and then reading the different reference from the other key-reference pair, in the manner discussed above with reference to step 316. Computer 110 then transmits the different reference to the requesting one of computers 110 as a response to the request, e.g., by storing the response in the same one of internal pipes 220 and transmitting a notification to the requesting one of computers 110 to read the response from the internal pipe.

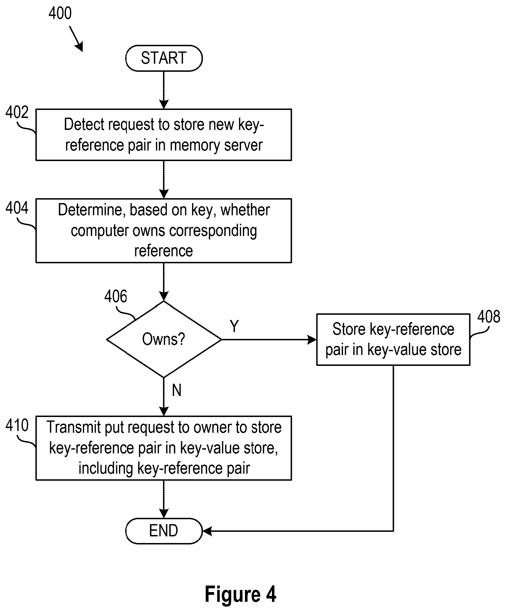

Figure 4 is a flow diagram of a method 400 that may be performed by one of computers 110 to store a new key-reference pair in key-value store 150, according to some embodiments. At step 402, computer 110 detects a request to store the new key-reference pair in key-value store 150. For example, the request may originate from a process or thread of application 122. At step 404, computer 110 determines, based on the key of the key-reference pair, whether it owns the corresponding reference. For example, as discussed above, according to some embodiments, the key includes an owner field with an ID of one of computers 110 that owns the corresponding reference. According to such embodiments, computer 110 may read the owner field of the key to determine whether it owns the corresponding reference.

At step 406, if computer 110 owns the reference, method 400 moves to step 408. At step 408, computer 110 stores the key-reference pair in key-value store 150. For example, following the example of Figure 2, computer 110 may apply a hash function to the key, the hash function outputting a value corresponding to one of buckets 210. Computer 110 then may then store the key-reference pair in the determined one of buckets 210. For example, if there is already a key-reference pair in the determined bucket, computer 110 may create a linked list with a node for each of the key-reference pairs. As another example, if there is already a linked list in the determined bucket with key-reference pairs therein, computer 110 may create a new node including the key-reference pair and insert the new node in the linked list, e.g., at the end of the linked list.

Additionally, at step 408, to avoid multiple processes or threads of application 122 making concurrent accesses to the same one of buckets 210, computer 110 may employ a locking mechanism, in the manner discussed above with reference to step 316 of method 300. For example, upon determining the one of buckets 210, computer 110 may select a lock from OS 126 associated with the bucket. If it is currently taken, computer 110 may wait until the lock becomes available. Once the lock is available, computer 110 may update the lock to indicate that it is now taken. Then, after storing the key-reference pair in key-value store 150, computer 110 may release the lock.

Returning to step 406, if computer 110 does not own the reference, method 400 moves to step 410. At step 410, computer 110 transmits a put request to the owner of the reference, the put request including the key-reference pair. As used herein, a put request is a message that indicates that the sender is requesting the receiver to insert into key-value store 150, a key-reference pair included in the put request. For example, computer 110 may store the put request in one of internal pipes 220. Computer 110 may then transmit a notification to the owner identifying the internal pipe. The owner may then read the put request from the internal pipe. After step 410, method 400 ends, and the owner stores the key-reference pair in key-value store 150, in the manner discussed above with reference to step 408.

It should be noted that similarly to computer 110 transmitting a put request at step 410, computer 110 may receive a put request from another of computers 110 for a different reference that is owned by computer 110, e.g., via one of internal pipes 220. The put request may include another key-reference pair. In response, computer 110 stores the other key-reference pair in key-value store 150, in the manner discussed above with reference to step 408.

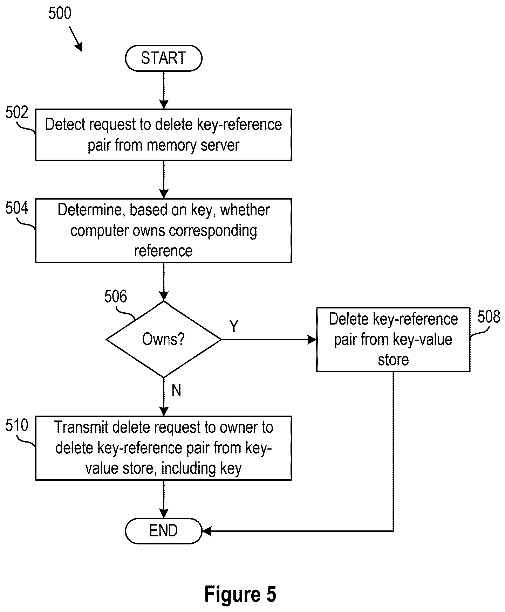

Figure 5 is a flow diagram of a method 500 that may be performed by one of computers 110 to delete a key-reference pair from key-value store 150, according to some embodiments. At step 502, computer 110 detects a request to delete the key-reference pair from key-value store 150. For example, the request may originate from a process or thread of application 122. At step 504, computer 110 determines, based on the key of the key-reference pair, whether it owns the corresponding reference. For example, as discussed above, according to some embodiments, the key includes an owner field with an ID of one of computers 110 that owns the corresponding reference. According to such embodiments, computer 110 may read the owner field of the key to determine whether it owns the corresponding reference.

At step 506, if computer 110 owns the reference, method 500 moves to step 508. At step 508, computer 110 deletes the key-reference pair from key-value store 150. For example, following the example of Figure 2, computer 110 may apply a hash function to the key, the hash function outputting a value corresponding to one of buckets 210. Computer 110 may then delete the key-reference pair from the determined one of buckets 210. For example, if the key-reference pair is stored in a node of a linked list, computer 110 may delete the node from the linked list.

Additionally, at step 508, to avoid multiple processes or threads of application 122 making concurrent accesses to the same one of buckets 210, computer 110 may employ a locking mechanism, in the manner discussed above with reference to step 316 of method 300. For example, upon determining the one of buckets 210, computer 110 may select a lock from OS 126 associated with the bucket. If it is currently taken, computer 110 may wait until the lock becomes available. Once the lock is available, computer 110 may update the lock to indicate that it is now taken. Then, after deleting the key-reference pair from key-value store 150, computer 110 may release the lock.

Returning to step 506, if computer 110 does not own the reference, method 500 moves to step 510. At step 510, computer 110 transmits a delete request to the owner of the reference, the delete request including the key of the key-reference pair. As used herein, a delete request is a message that indicates that the sender is requesting the receiver to delete from key-value store 150, the key-reference pair associated with a key included in the delete request. For example, computer 110 may store the delete request in one of internal pipes 220. Computer 110 may then transmit a notification to the owner identifying the internal pipe. The owner may then read the delete request from the internal pipe. After step 510, method 500 ends, and the owner deletes the key-reference pair from key-value store 150, in the manner discussed above with reference to step 508.

It should be noted that similarly to computer 110 transmitting a delete request at step 510, computer 110 may receive a delete request from another of computers 110 for a different reference that is owned by computer 110, e.g., via one of internal pipes 220. The delete request may include another key. In response, computer 110 deletes the associated key-reference pair from key-value store 150, in the manner discussed above with reference to step 508.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

The embodiments described herein also relate to an apparatus for performing these operations. The apparatus may be specially constructed for required purposes, or the apparatus may be a general-purpose computer selectively activated or configured by a computer program stored in the computer. The embodiments described herein may also be practiced with computer system configurations including mobile computing devices, personal computers, server computers, microprocessor systems, mainframe computers, etc., and combinations thereof, which may communicate across one or more networks.

The embodiments described herein also relate to one or more computer programs or as one or more computer program modules embodied in computer-readable storage media. The term computer-readable medium refers to any data storage device that can store data, which can thereafter be input into an apparatus or computer system. Computer-readable media may be based on any existing or subsequently developed technology that embodies computer programs in a manner that enables a computer to read the programs. Examples of computer-readable media include magnetic drives, SSDs, network-attached storage (NAS) systems, RAM, read-only memory (ROM), compact disks (CDs), digital versatile disks (DVDs), and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components may be implemented as a combined component. Similarly, structures and functionalities presented as a single component may be implemented as separate components. These and other variations, additions, and improvements may fall within the scope of the appended claims.

The invention further comprises the following embodiments forming part of the description:
1. A computer system including a first computer and a second computer, wherein the first and second computers each includes a processor and local memory, the processor of the first computer executing instructions stored in the local memory of the first computer to access data stored in a memory system remotely from the first and second computers, by performing the following steps: determining a first key associated with first data that is stored in the memory system;
   determining, based on the first key, to transmit to the second computer, a request for a first reference to the first data, and then transmitting the request for the first reference to the second computer, wherein the request for the first reference includes the first key;
   receiving the first reference from the second computer, which the second computer determines by using the first key to locate a first key-reference pair in the memory system and then reading the first reference from the first key-reference pair; and
   reading the first data directly from the memory system using the first reference received from the second computer to locate a memory address of the first data in the memory system.
2. The computer system of embodiment 1, wherein the steps further include:
   transmitting, to the second computer, a put request including a second key-reference pair, wherein the second key-reference pair includes a second reference for accessing second data from the memory system, the second computer storing the second key-reference pair in the memory system in response to the put request.
3. The computer system of embodiment 1, wherein the steps further include:
   transmitting, to the second computer, a delete request including a second key, wherein the second key is part of a second key-reference pair stored in the memory system, the second computer deleting the second key-reference pair from the memory system in response to the delete request.
4. The computer system of embodiment 1, wherein the processor of the second computer executes instructions stored in the local memory of the second computer to perform the following step:
   computing a hash of the first key to locate a bucket in a hash table of the memory system at which the first key-reference pair is stored.
5. The computer system of embodiment 1, wherein the processor of the second computer executes instructions stored in the local memory of the second computer to perform the following steps:
   before determining the first reference, updating a lock associated with the first key-reference pair to indicate that the lock is taken; and
   after determining the first reference, updating the lock to indicate that the lock is available.
6. The computer system of embodiment 1, wherein the steps further include:
   receiving, from the second computer, a request for a second reference to second data, wherein the request for the second reference includes a second key associated with the second data;
   determining the second reference by using the second key to locate a second key-reference pair in the memory system and then reading the second reference from the second key-reference pair; and transmitting the second reference to the second computer as a response to the request for the second reference.
7. The computer system of embodiment 1, wherein the steps further include:
   storing the first reference in a reference cache of the first computer;
   reading the first reference from the reference cache; and
   storing updated data in the memory system using the first reference read from the reference cache.
8. The computer system of embodiment 1, wherein the steps further include:
   storing the first data in a cache of the processor of the first computer;
   after storing the first data in the cache of the processor, deleting the first data from the cache of the processor in response to a request to access updated data, wherein the updated data is stored at the same memory address of the memory system as the first data; and
   after deleting the first data, reading the updated data directly from the memory system using the first reference to locate the memory address of the updated data in the memory system.
9. The computer system of embodiment 1, wherein the steps further include:
   writing a request for the first reference to the memory system to be read by the second computer; and
   reading, from the memory system, a response to the request for the first reference, wherein the response includes the first reference received from the second computer.
10. The computer system of embodiment 1, wherein the steps further include:
   reading, from a field of the first key, an identifier of the second computer, to determine to transmit the request for the first reference to the second computer.
11. A method of accessing data stored in a memory system remotely from a first computer and a second computer, the method comprising:
   determining, by the first computer, a first key associated with first data that is stored in the memory system;
   determining, by the first computer based on the first key, to transmit to the second computer, a request for a first reference to the first data, and then transmitting the request for the first reference to the second computer, wherein the request for the first reference includes the first key;
   receiving, by the first computer, the first reference from the second computer, which the second computer determines by using the first key to locate a first key-reference pair in the memory system and then reading the first reference from the first key-reference pair; and
   reading, by the first computer, the first data directly from the memory system using the first reference received from the second computer to locate a memory address of the first data in the memory system.
12. The method of embodiment 11, further comprising:
   transmitting, by the first computer to the second computer, a put request including a second key-reference pair, wherein the second key-reference pair includes a second reference for accessing second data from the memory system, the second computer storing the second key-reference pair in the memory system in response to the put request.
13. The method of embodiment 11, further comprising:
   transmitting, by the first computer to the second computer, a delete request including a second key,
   wherein the second key is part of a second key-reference pair stored in the memory system, the second computer deleting the second key-reference pair from the memory system in response to the delete request.
14. The method of embodiment 11, further comprising:
   computing, by the second computer, a hash of the first key to locate a bucket in a hash table of the memory system at which the first key-reference pair is stored.
15. The method of embodiment 11, further comprising:
   before determining the first reference, updating, by the second computer, a lock associated with the first key-reference pair to indicate that the lock is taken; and
   after determining the first reference, updating, by the second computer, the lock to indicate that the lock is available.
16. The method of embodiment 11, further comprising:
   receiving, by the first computer from the second computer, a request for a second reference to second data, wherein the request for the second reference includes a second key associated with the second data;
   determining, by the first computer, the second reference by using the second key to locate a second key-reference pair in the memory system and then reading, by first computer, the second reference from the second key-reference pair; and
   transmitting, by the first computer, the second reference to the second computer as a response to the request for the second reference.
17. The method of embodiment 11, further comprising:
   storing, by the first computer, the first reference in a reference cache of the first computer;
   reading, by the first computer, the first reference from the reference cache; and
   storing, by the first computer, updated data in the memory system using the first reference read from the reference cache.
18. The method of embodiment 11, further comprising:
   storing, by the first computer, the first data in a cache of a processor of the first computer;
   after storing the first data in the cache of the processor, deleting, by the first computer, the first data from the cache of the processor in response to a request to access updated data, wherein the updated data is stored at the same memory address of the memory system as the first data; and
   after deleting the first data, reading, by the first computer, the updated data directly from the memory system using the first reference to locate the memory address of the updated data in the memory system.
19. The method of embodiment 11, further comprising:
   writing, by the first computer, a request for the first reference to the memory system to be read by the second computer; and
   reading, by the first computer from the memory system, a response to the request for the first reference, wherein the response includes the first reference received from the second computer.
20. The method of embodiment 11, further comprising:
   reading, by the first computer from a field of the first key, an identifier of the second computer, to determine to transmit the request for the first reference to the second computer.

## Claims

1. A computer system including a first computer and a second computer, wherein the first and second computers each includes a processor and local memory, the processor of the first computer executing instructions stored in the local memory of the first computer to access data stored in a memory system remotely from the first and second computers, by performing the following steps:
determining a first key associated with first data that is stored in the memory system;
determining, based on the first key, to transmit to the second computer, a request for a first reference to the first data, and then transmitting the request for the first reference to the second computer, wherein the request for the first reference includes the first key;
receiving the first reference from the second computer, which the second computer determines by using the first key to locate a first key-reference pair in the memory system and then reading the first reference from the first key-reference pair; and
reading the first data directly from the memory system using the first reference received from the second computer to locate a memory address of the first data in the memory system.

2. The computer system of claim 1, wherein the steps further include:
transmitting, to the second computer, a put request including a second key-reference pair, wherein the second key-reference pair includes a second reference for accessing second data from the memory system, the second computer storing the second key-reference pair in the memory system in response to the put request.

3. The computer system according to at least one of the preceding claims, wherein the steps further include:
transmitting, to the second computer, a delete request including a second key, wherein the second key is part of a second key-reference pair stored in the memory system, the second computer deleting the second key-reference pair from the memory system in response to the delete request.

4. The computer system according to at least one of the preceding claims, wherein the processor of the second computer executes instructions stored in the local memory of the second computer to perform the following step:
computing a hash of the first key to locate a bucket in a hash table of the memory system at which the first key-reference pair is stored.

5. The computer system according to at least one of the preceding claims, wherein the processor of the second computer executes instructions stored in the local memory of the second computer to perform the following steps:
before determining the first reference, updating a lock associated with the first key-reference pair to indicate that the lock is taken; and
after determining the first reference, updating the lock to indicate that the lock is available.

6. The computer system according to at least one of the preceding claims, wherein the steps further include:
receiving, from the second computer, a request for a second reference to second data, wherein the request for the second reference includes a second key associated with the second data;
determining the second reference by using the second key to locate a second key-reference pair in the memory system and then reading the second reference from the second key-reference pair; and
transmitting the second reference to the second computer as a response to the request for the second reference.

7. The computer system according to at least one of the preceding claims, wherein the steps further include:
storing the first reference in a reference cache of the first computer;
reading the first reference from the reference cache; and
storing updated data in the memory system using the first reference read from the reference cache.

8. The computer system according to at least one of the preceding claims, wherein the steps further include:
storing the first data in a cache of the processor of the first computer;
after storing the first data in the cache of the processor, deleting the first data from the cache of the processor in response to a request to access updated data, wherein the updated data is stored at the same memory address of the memory system as the first data; and
after deleting the first data, reading the updated data directly from the memory system using the first reference to locate the memory address of the updated data in the memory system.

9. The computer system according to at least one of the preceding claims, wherein the steps further include:
writing a request for the first reference to the memory system to be read by the second computer; and
reading, from the memory system, a response to the request for the first reference, wherein the response includes the first reference received from the second computer,
and/or
wherein the steps further include:
reading, from a field of the first key, an identifier of the second computer, to determine to transmit the request for the first reference to the second computer.

10. A method of accessing data stored in a memory system remotely from a first computer and a second computer, the method comprising:
determining, by the first computer, a first key associated with first data that is stored in the memory system;
determining, by the first computer based on the first key, to transmit to the second computer, a request for a first reference to the first data, and then transmitting the request for the first reference to the second computer, wherein the request for the first reference includes the first key;
receiving, by the first computer, the first reference from the second computer, which the second computer determines by using the first key to locate a first key-reference pair in the memory system and then reading the first reference from the first key-reference pair; and
reading, by the first computer, the first data directly from the memory system using the first reference received from the second computer to locate a memory address of the first data in the memory system.

11. The method of claim 10, further comprising:
transmitting, by the first computer to the second computer, a put request including a second key-reference pair, wherein the second key-reference pair includes a second reference for accessing second data from the memory system, the second computer storing the second key-reference pair in the memory system in response to the put request,
and/or
the method further comprising:
transmitting, by the first computer to the second computer, a delete request including a second key, wherein the second key is part of a second key-reference pair stored in the memory system, the second computer deleting the second key-reference pair from the memory system in response to the delete request,
and/or
the method further comprising:
computing, by the second computer, a hash of the first key to locate a bucket in a hash table of the memory system at which the first key-reference pair is stored.

12. The method according to at least one of claims 10 or 11, further comprising:
before determining the first reference, updating, by the second computer, a lock associated with the first key-reference pair to indicate that the lock is taken; and
after determining the first reference, updating, by the second computer, the lock to indicate that the lock is available,
and/or
the method further comprising:
receiving, by the first computer from the second computer, a request for a second reference to second data, wherein the request for the second reference includes a second key associated with the second data;
determining, by the first computer, the second reference by using the second key to locate a second key-reference pair in the memory system and then reading, by first computer, the second reference from the second key-reference pair; and
transmitting, by the first computer, the second reference to the second computer as a response to the request for the second reference.

13. The method according to at least one of claims 10 to 12, further comprising:
storing, by the first computer, the first reference in a reference cache of the first computer;
reading, by the first computer, the first reference from the reference cache; and
storing, by the first computer, updated data in the memory system using the first reference read from the reference cache.

14. The method according to at least one of claims 10 to 13, further comprising:
storing, by the first computer, the first data in a cache of a processor of the first computer;
after storing the first data in the cache of the processor, deleting, by the first computer, the first data from the cache of the processor in response to a request to access updated data, wherein the updated data is stored at the same memory address of the memory system as the first data; and
after deleting the first data, reading, by the first computer, the updated data directly from the memory system using the first reference to locate the memory address of the updated data in the memory system.

15. The method according to at least one of claims 10 to 14, further comprising:
writing, by the first computer, a request for the first reference to the memory system to be read by the second computer; and
reading, by the first computer from the memory system, a response to the request for the first reference, wherein the response includes the first reference received from the second computer,
and/or
the method further comprising:
reading, by the first computer from a field of the first key, an identifier of the second computer, to determine to transmit the request for the first reference to the second computer.
